# FASCICULE DE BREVET EUROPEEN

(11) **EP 1 965 085 B1**
(45) Date de publication et mention de la délivrance du brevet: **03.03.2010**
(21) Numéro de dépôt: 08300075.2
(22) Date de dépôt: 08.02.2008
(51) Int. Cl.: F16B 2/04, F16B 5/06

(54) **Dispositif connecteur à double prise de fixations, et notamment son application pour la fixation d'enjoliveurs pour portes latérales coulissantes de véhicules**
Verbindungsvorrichtung mit doppeltem Befestigungsanschluss und insbesondere deren Einsatz zur Befestigung von Zierkappen für seitliche Schiebetüren von Fahrzeugen
Connector device with double attachment socket and, in particular, its application in attaching trims to the sliding side doors of vehicles

(30) Priorité: 27.02.2007 FR 0753536
(43) Date de publication de la demande: 03.09.2008
(73) Titulaire: Financiere de Beaumont- FDB, 26100 Romans (FR)
(72) Inventeur: Courbis, Hervé, 26106 ROMANS SUR ISERE (FR)
(74) Mandataire: Dupuis, François

(56) Documents cités:
- EP-A- 1 097 829

## Description

L'invention se rattache au secteur technique des dispositifs de liaison et de raccordement entre des pièces destinées à être assemblées. L'invention se rattache au secteur technique des dispositifs de fixation d'enjoliveurs sur les portes latérales coulissantes de véhicules.

Le Demandeur a été amené à considérer les problèmes posés relatifs à la protection des mécanismes disposés sur les portes latérales coulissantes de véhicules, ainsi qu'à celui des aspects de finition de la carrosserie desdits véhicules dans leurs teintes par rapport à celles des enjoliveurs de teintes ou nuances différentes recouvrant lesdits mécanismes.

Lesdits mécanismes sont généralement intégrés dans des boîtiers et positionnés dans les rainures de guidage prévues à cet effet sur la carrosserie des portes. Des garnitures ou enjoliveurs sont ensuite rajoutés et fixés par soudure. Ceux-ci sont préalablement teintés et on constate des différences de nuances conséquentes avec la teinte du véhicule, de sorte que cela nuit à l'esthétique. Le Demandeur a donc été amené à rechercher une solution qui remédie à ces inconvénients.

On connait par le brevet EP 1 097 829 un dispositif de clipsage permettant la fixation de visière ou pare-soleil dans les véhicules automobiles. Ce dispositif présente des moyens pour se fixer dans la partie toit du véhicule et présente des zones d'accrochage du pare-soleil. Il n'est cependant pas adapté à l'application de l'invention.

La solution imaginée répond au problème posé car les enjoliveurs, avec leur dispositif de fixation spécifique, permettent de les traiter en peinture en même temps que la carrosserie, de sorte à obtenir une uniformité de teintes.

Au surplus, le dispositif imaginé par le Demandeur trouve des applications plus larges dans le cadre d'assemblage de composants devant être espacés avec des faces de liaison parallèles définissant un espace intérieur pour le cas échéant positionner des moyens et mécanismes divers selon les applications.

L'invention vise donc en elle-même un dispositif connecteur à double fixation, le dispositif trouvant de nombreuses applications dont celle visant à la pose des enjoliveurs sur les portes latérales coulissantes d'un véhicule.

Selon une première caractéristique de l'invention, le dispositif connecteur de plusieurs composants est remarquable en ce qu'il est constitué par un seul ensemble monobloc réalisé en matière plastique, ledit ensemble étant conçu pour assurer une double prise de fixation sur des plans de fixation éloignés et parallèles entre eux en définissant entre lesdits plans un espace, et en ce qu'il comprend un corps fermé définissant le volume extérieur parallélépipédique dudit dispositif et constitué par deux bras latéraux profilés en S parallèles entre eux en définissant ledit espace pour l'intégration et l'articulation d'un moyen assurant une double fonction de prise et de manipulation, et en ce que les deux bras latéraux sont solidarisés à chacune de leur deux extrémités d'une part à l'arrière par une base transversale profilée servant de première prise et fixation du dispositif connecteur, et d'autre part à l'avant par un plan transversal profilé et agencé pour constituer un des éléments de la seconde prise et fixation du dispositif connecteur.

Selon une autre caractéristique, le dispositif connecteur trouve une application pour la fixation de plaques enjoliveurs pour portes latérales coulissante de véhicules.

Ces caractéristiques et d'autres encore ressortiront bien de la suite de la description.

Pour fixer l'objet de l'invention illustrée d'une manière non limitative aux figures des dessins où :

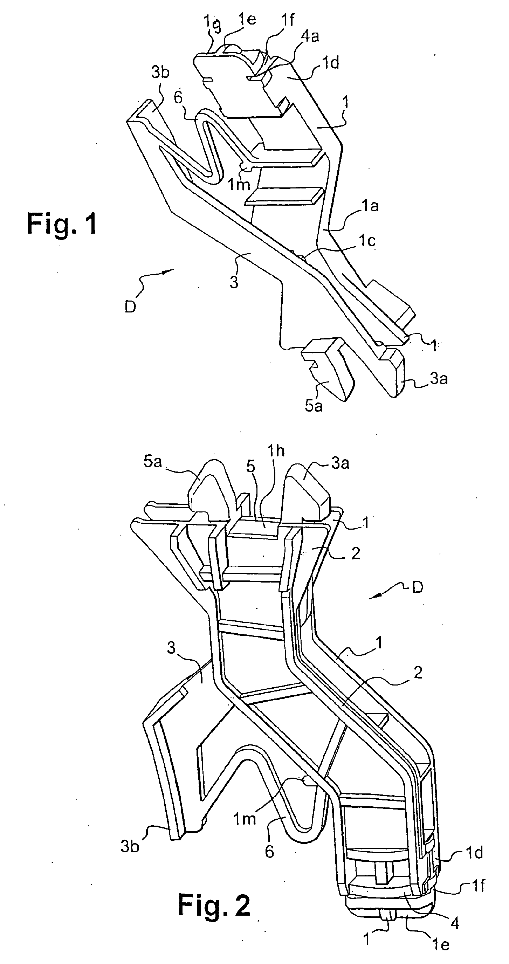

- la figure 1 est une vue en perspective du dispositif connecter à double fixation selon l'invention, le dispositif étant représentés partiellement pour la compréhension de l'invention.
- la figure 2 est une vue de profil du dispositif selon la figure 1 mais connectée à l'autre côté.

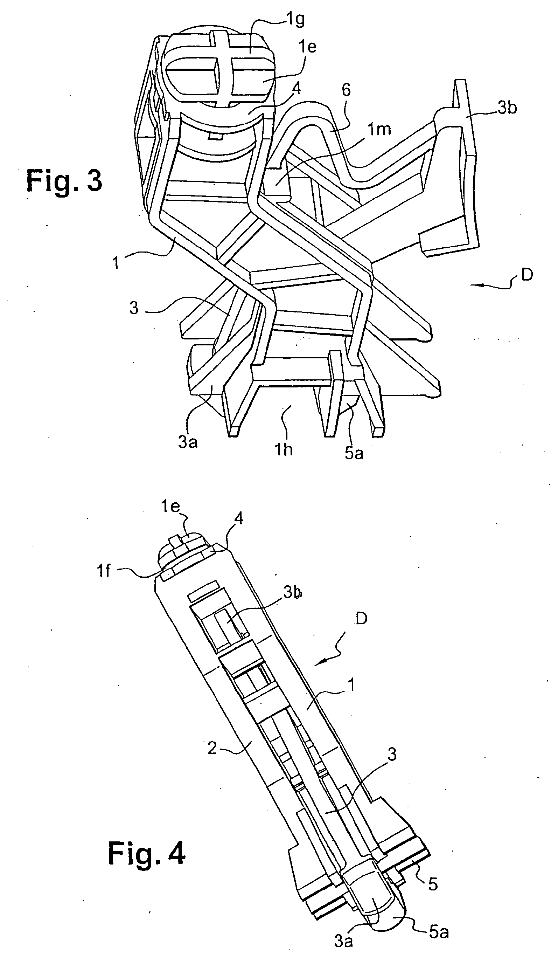

- la figure 3 est une vue en perspective de ¾ arrière du dispositif selon la figure 1.
- la figure 4 est une vue de dessus du dispositif.

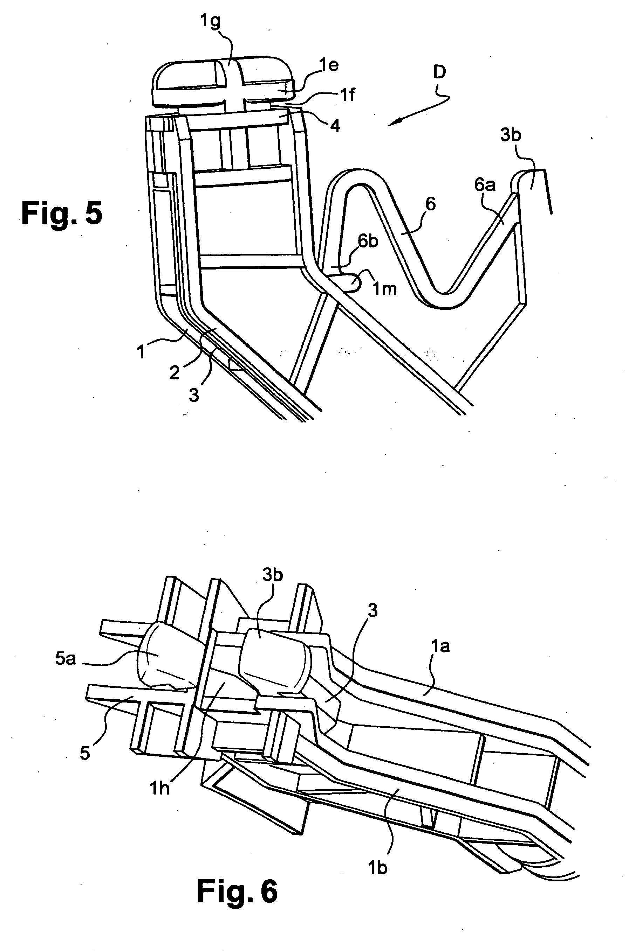

- la figure 5 est une vue partielle arrière à grande échelle du dispositif selon l'invention.
- la figure 6 est une vue partielle avant à grande échelle du dispositif selon l'invention.

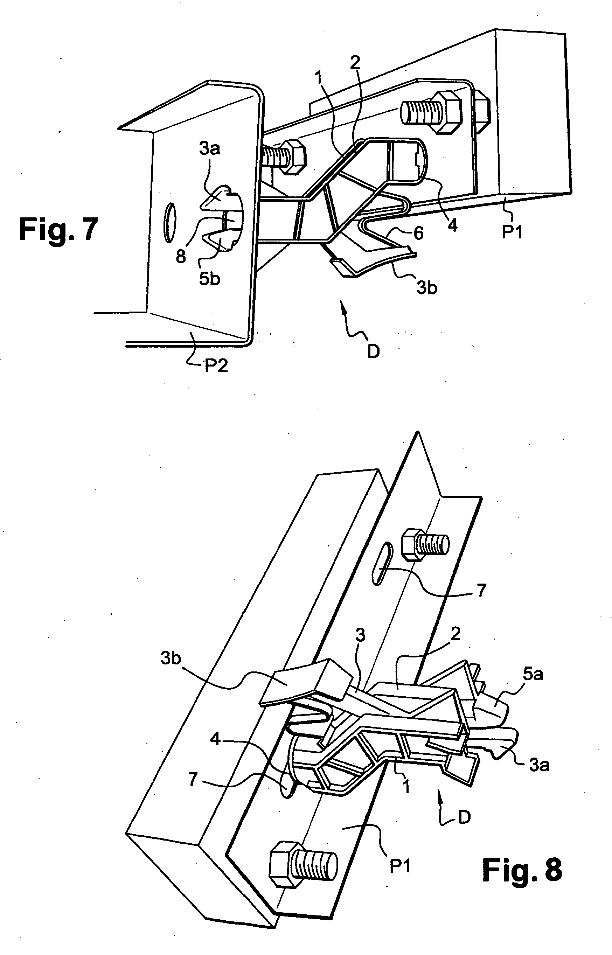

- la figure 7 est une vue montrant les conditions d'utilisation du dispositif connecteur selon l'invention avec un exemple de montage des composants.
- la figure 8 montre le prépositionnement du dispositif connecteur sur un des composants à assembler.
- la figure 9 montre un exemple d'application du dispositif connecteur selon l'invention pour un enjoliveur adapté sur une porte latérale coulissante de véhicule.
- la figure 10 montre face intérieure de l'enjoliveur et un dispositif de connecteur.
- la figure 11 montre l'adaptateur de l'enjoliveur sur la carrosserie de porte avec la représentation schématisée de deux dispositifs connecteurs.
- la figure 12 montre l'autre côté de la porte montrant l'attache du dispositif connecteur.

Afin de rendre plus concret l'objet de l'invention, on le décrit maintenant d'une manière non limitative illustrée aux figures des dessins.

Le dispositif connecteur à double prise de fixation est référencé dans son ensemble par (D). Il est remarquable en ce qu'il est constitué par un seul ensemble monobloc réalisé en matière plastique, ledit ensemble étant conçu pour assurer la double prise de fixation sur des plans de fixation (P1-P2) éloignés et parallèles entre eux en définissant entre lesdits plans un espace (E) dont l'utilisation est variable.

Le dispositif connecteur comprend ainsi un corps fermé définissant le volume extérieur parallélépipédique dudit dispositif et constitué par deux bras latéraux (1-2) profilés en S parallèles entre eux en définissant un espace pour l'intégration et l'articulation d'un moyen (3) assurant une double fonction de prise et de manipulation. Les deux bras latéraux (1-2) sont solidarisés à chacune de leur deux extrémités d'une part à l'arrière par une base transversale (4) profilée servant de première prise et fixation du dispositif connecteur, et d'autre part à l'avant par un plan transversal (5) profilé et agencé pour constituer un des éléments de la seconde prise et fixation du dispositif connecteur. Les deux bras latéraux (1-2) présentent en leur milieu (1a-1b) un axe de liaison (1c) transversal à partir duquel est articulé le moyen (3) intermédiaire. La base transversale (4) arrière présente une partie de liaison (4a) entre les extrémités arrière (1d) des bras (1a-1b), puis un disque (1e) de configuration oblongue définissant par rapport à la partie (4a) une gorge (1f). La face apparente du disque (1e) présente une forme en saillie (1g) en croix par exemple. La forme oblongue du disque est établie dans le plan axial du corps constitué avec les bras latéraux (1-2). A l'avant, le plan transversal (5) est débouchant en (1h) dans sa partie avant correspondant à l'espace entre les bras (1-2). Cette ouverture de forme rectangulaire permet le passage de l'articulation de l'extrémité (3a) du moyen (3) dans sa partie avant. Cette extrémité (3a) a une configuration en crochet et est assujettie à un mouvement de basculement. Par ailleurs, le plan transversal (5) du corps est aménagé en débordement avec une forme (5a) en saillie configurée en crochet, orientée opposée à la forme en crochet (3a) du moyen (3). Ce moyen (3) présente ainsi une forme en S en opposition à la forme en S du corps. Ce moyen (3) est articulé par rapport à l'axe transversal établi entre les bras latéraux (1-2) et son milieu. L'extrémité avant forme crochet et l'extrémité arrière (3b) forme un plan d'appui du pouce de l'utilisateur par exemple. Par ailleurs, cette dite extrémité arrière (3b) est reliée à la face en regard interne du corps par un moyen élastique de déformation (6). Ce dernier est établi sous la forme d'une languette obtenue aussi lors de la fabrication du dispositif connecteur et ayant une configuration en S. Ce moyen (6) permet d'absorber le pivotement du moyen (3) en vue de la mise en place et la fixation du dispositif connecteur. Une extrémité (6a) est fixée sous le plan d'appui (3b) et de préhension, et l'autre extrémité (6b) sur un plan de jonction transversal (1m) formé entre les bras (1-2) dans leur partie arrière.

Le moyen (3) présente hors ses extrémités une configuration méplate pour être dans une configuration similaire à la section méplate des bras (1-2) et s'intègre parfaitement dans le logement récepteur entre lesdits bras.

Ainsi, le dispositif connecteur monobloc selon l'invention intègre dans ses parties avant et arrière des moyens de prise et de fixation opposés définis respectivement par les formes en crochet (3a) et (5a) opposées, et sur la partie arrière du corps avec le disque (1e) et la gorge (1f).

Le mode de fixation du dispositif connecteur est donc le suivant par rapport à deux plans de fixation (P1-P2) éloignés et parallèles l'un de l'autre. Un plan (P1) est aménagé pour recevoir le dispositif connecteur par exemple par la partie arrière. Un plan (P1) est agencé avec des lumières oblongues (7) dont les dimensions sont établies pour permettre le passage et l'introduction du disque (1e) du corps du dispositif connecteur, et ce dans son sens de grande longueur.

Une fois introduit dans les lumières correspondantes (7) du plan d'appui, le dispositif connecteur est pivoté d'un quart de tour sur lui-même et dans ces conditions, il est verrouillé en position et ne peut s'échapper. L'autre plan d'appui et d'accrochage (P2) est aménagé avec des ouvertures (8) cylindriques permettant le passage des crochets (3a-5a) en position de rapprochement. L'utilisateur doit alors faire appui sur l'extrémité (3b) du moyen (3) à l'encontre du moyen élastique (6) pour rapprocher l'extrémité (3a) en crochet du crochet fixe (5a) formé sur la partie avant du corps. Le passage des crochets (3a-5a) étant effectué à travers les ouvertures (8) dans le plan (P2), le relâchement de la prise sur l'extrémité (3b) permet par l'effort de détente du moyen élastique (6) l'écartement des crochets (3a-5a) et le verrouillage en position du dispositif connecteur par rapport aux deux plans (P1-P2). La manoeuvre est facile à exécuter.

Le dispositif connecteur est donc de conception simple, peu coûteuse et permet une fixation rapide sur les plans (P1-P2). La manipulation de l'extrémité (3b) du moyen (3) s'effectue en étant éloignée de la première prise (1e-1f) et s'effectue donc avec un positionnement établi du dispositif connecteur.

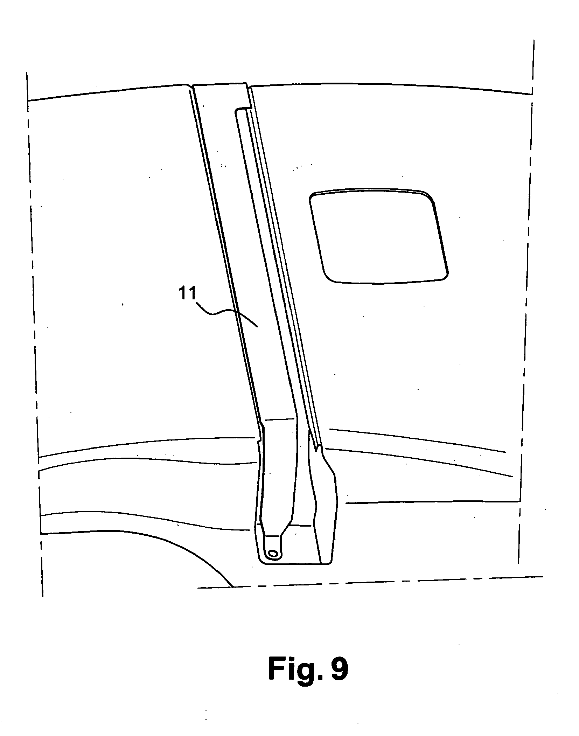

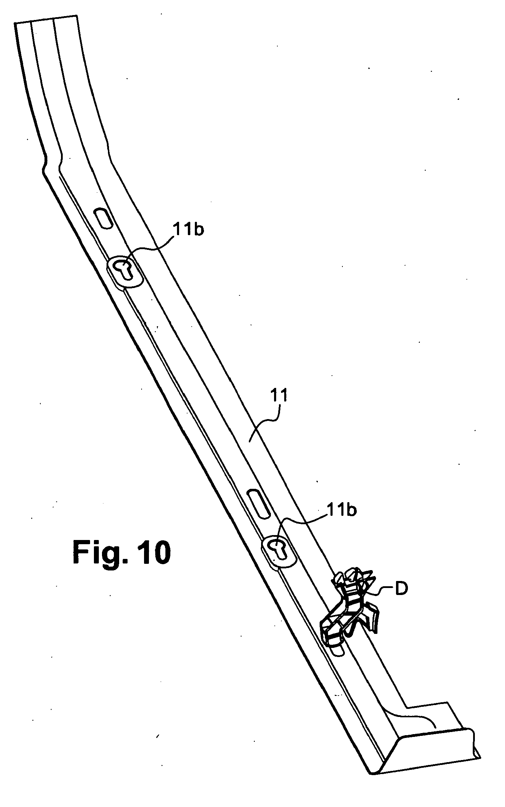

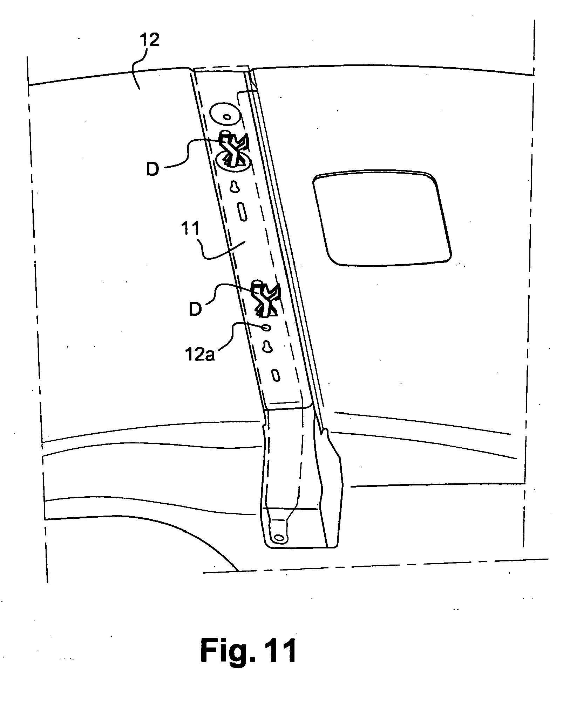

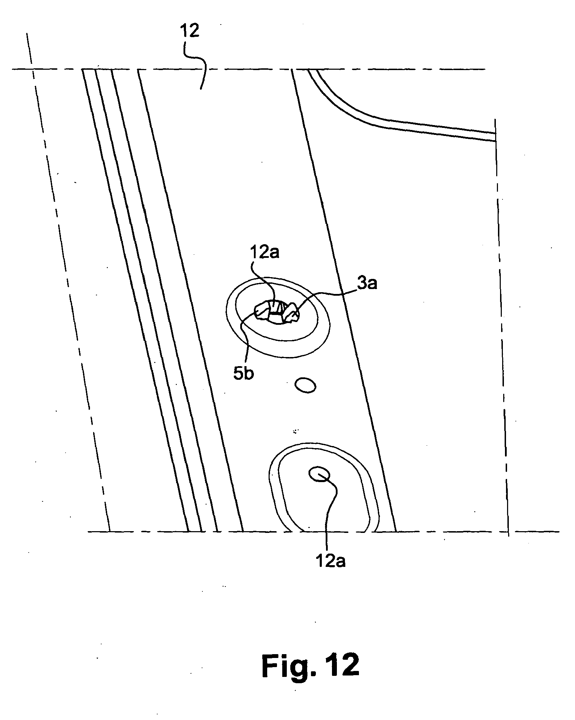

Le dispositif connecteur selon l'invention peut trouver de nombreuses applications. Il y a lieu cependant en se référant aux figures 9 à 12, de spécifier l'application de l'invention au montage des enjoliveurs ou profilés de protection disposés sur les portes latérales coulissantes du véhicule à l'endroit de leur mécanisme de verrouillage-déverrouillage.

La plaque enjoliveur (11) présente un profil extérieur correspondant à la configuration choisie du véhicule. La plaque enjoliveur présente sur son côté interne un rail longitudinal (11a) avec des ouvertures oblongues (11b) pour le passage et la fixation du dispositif connecteur pour sa première prise. La carrosserie (12) du véhicule à l'endroit choisi présente des ouvertures (12a) pour le passage de la seconde prise définie par les formes en crochet du dispositif connecteur. La plaque enjoliveur dans cette application est établie selon les formes et dimensions souhaitées, ainsi qu'avec un matériau approprié destiné à être peint avec la carrosserie de la porte, de manière à avoir une configuration esthétique homogène.

## Revendications

1. Dispositif connecteur de plusieurs composants **caractérisé en ce qu'**il est constitué par un seul ensemble monobloc réalisé en matière plastique, ledit ensemble étant conçu pour assurer une double prise de fixation sur des plans de fixation (P1-P2) éloignés et parallèles entre eux en définissant entre lesdits plans un espace (E), et **en ce qu'**il comprend un corps fermé définissant le volume extérieur parallélépipédique dudit dispositif et constitué par deux bras latéraux (1-2) profilés en S parallèles entre eux en définissant ledit espace pour l'intégration et l'articulation d'un moyen (3) assurant une double fonction de prise et de manipulation, et **en ce que** les deux bras latéraux (1-2) sont solidarisés à chacune de leur deux extrémités d'une part à l'arrière par une base transversale (4) profilée servant de première prise et fixation du dispositif connecteur, et d'autre part à l'avant par un plan transversal (5) profilé et agencé pour constituer un des éléments de la seconde prise et fixation du dispositif connecteur.

2. Dispositif connecteur, selon la revendication 1, **caractérisé en ce que** les deux bras latéraux (1-2) présentent en leur milieu (1a-1b) un axe de liaison (1c) transversal à partir duquel est articulé le moyen (3) intermédiaire.

3. Dispositif connecteur, selon l'une quelconque des revendications 1 et 2, **caractérisé en ce que** la base transversale (4) arrière présente une partie de liaison (4a) entre les extrémités arrière (1d) des bras (1a-1b), puis un disque (1e) de configuration oblongue définissant par rapport à la partie (4a) une gorge (If), **en ce que** la forme oblongue du disque est établie dans le plan axial du corps constitué avec les bras latéraux (1-2).

4. Dispositif connecteur, selon l'une quelconque des revendications 1 et 2, **caractérisé en ce qu'**à l'avant du corps, le plan transversal (5) est débouchant en (1h) dans sa partie avant correspondant à l'espace entre les bras (1-2), et **en ce que** cette ouverture permet le passage de l'articulation de l'extrémité (3a) du moyen (3) dans sa partie avant, et **en ce que** ladite extrémité (3a) a une configuration en crochet et est assujettie à un mouvement de basculement, et **en ce que** le plan transversal (5) du corps est aménagé en débordement avec une forme (5a) en saillie configurée en crochet, orientée opposée à la forme en crochet (3a) du moyen (3).

5. Dispositif connecteur, selon l'une quelconque des revendications 1 à 4, **caractérisé en ce que** le moyen (3) présente une forme en S en opposition à la forme en S du corps, et **en ce que** le moyen (3) est articulé par rapport à l'axe transversal établi entre les bras latéraux (1-2) et son milieu.

6. Dispositif connecteur, selon la revendication 5, **caractérisé en ce que** l'extrémité avant forme crochet et l'extrémité arrière (3b) forme un plan d'appui, et **en ce que** ladite extrémité arrière (3b) est reliée à la face en regard interne du corps par un moyen élastique de déformation (6).

7. Dispositif connecteur, selon la revendication 6, **caractérisé en ce que** le moyen élastique de déformation (6) est établi sous la forme d'une languette obtenue aussi lors de la fabrication du dispositif connecteur et ayant une configuration en S, **en ce que** ce moyen (6) permet d'absorber le pivotement du moyen (3) en vue de la mise en place et la fixation du dispositif connecteur, et **en ce qu'**une extrémité (6a) est fixée sous le plan d'appui (3b) et de préhension, et l'autre extrémité (6b) sur un plan de jonction transversal (1m) formé entre les bras (1-2) dans leur partie arrière.

8. Dispositif connecteur, selon l'une quelconque des revendications 1 à 7, **caractérisé en ce que** le moyen (3) présente hors ses extrémités une configuration méplate pour être dans une configuration similaire à la section méplate des bras (1-2) et s'intégrer parfaitement dans le logement récepteur entre lesdits bras.

9. Dispositif connecteur, selon l'une quelconque des revendications 1 à 8, **caractérisé en ce qu'**il s'adapte sur deux plans de fixation (P1-P2) éloignés et parallèles l'un de l'autre, et **en ce qu'**un plan (P1) est aménagé pour recevoir le dispositif connecteur par la partie arrière, en étant agencé avec des lumières oblongues (7) dont les dimensions sont établies pour permettre le passage et l'introduction du disque (1e) du corps du dispositif connecteur, et ce dans son sens de grande longueur, et **en ce que** l'autre plan d'appui et d'accrochage (P2) est aménagé avec des ouvertures (8) cylindriques permettant le passage des crochets (3a-5a) en position de rapprochement.

10. Dispositif connecteur, selon l'une quelconque des revendications 1 à 9, **caractérisé** dans son application à la fixation de plaques enjoliveurs pour portes latérales coulissantes de véhicules.

## Claims

1. Device connecting a plurality of components **characterized in that** it is constituted by a single unit cast in one piece and made out of a plastic material, said unit being designed to provide a dual anchor for attachment to attachment planes (P1-P2) that are separate from and parallel to each other defining between said planes a space (E), and **in that** it includes a closed body defining the outer parallelepiped volume of said device and constituted by two S-shaped lateral arms (1-2) parallel to each other defining said space for the integration and articulation of a means (3) providing a dual anchor and manipulation function, and **in that** the two lateral arms (1-2) are secured at each of their two ends on the one hand at the rear by a streamlined transverse base (4) acting as a first anchor and attachment of the connecting device, and on the other hand at the front by a streamlined transverse plane (5) arranged so as to constitute one of the elements of the second anchor and attachment of the connecting device.

2. Connecting device, as claimed in claim 1, **characterized in that** the two lateral arms (1-2) have at their mid-point (1a-1b) a transverse connection axis (1c) from which the intermediate means (3) is articulated.

3. Connecting device, as claimed in any one of claims 1 and 2, **characterized in that** the rear transverse base (4) has a connection part (4a) between the rear ends (1d) of the arms (1a-1b), then a disc (1e) of oblong configuration defining relative to the part (4a) a groove (1f), and **in that** the oblong shape of the disc is established in the axial plane of the body constituted with the lateral arms (1-2).

4. Connecting device, as claimed in any one of claims 1 and 2, **characterized in that** at the front of the body, the transverse plane (5) is open at (1h) in the front part thereof corresponding to the space between the arms (1-2), and **in that** said opening enables the articulation of the end (3a) of the means (3) to pass through in the front part thereof, and **in that** said end (3a) has a hook-shaped configuration and is subject to a swinging movement, and **in that** the transverse plane (5) of the body is designed to have as a projection a hook-shaped projecting form (5a), positioned opposite the hook shape (3a) of the means (3).

5. Connecting device, as claimed in any one of claims 1 to 4, **characterized in that** the means (3) has an S-shape in opposition to the S-shape of the body, and **in that** the means (3) is articulated relative to the transverse axis established between the lateral arms (1-2) and the mid-point thereof.

6. Connecting device, as claimed in claim 5, **characterized in that** the front end forms a hook and the rear end (3b) forms a support plane, and **in that** said rear end (3b) is connected to the opposite facing internal face of the body by a resilient deformation means (6).

7. Connecting device, as claimed in claim 6, **characterized in that** the resilient deformation means (6) is established in the form of a tongue also obtained during manufacture of the connecting device and having an S-shaped configuration, **in that** the means (6) is able to absorb the pivoting of the means (3) for the purpose of installing and attaching the connecting device, and **in that** one end (6a) is secured under the support and gripping plane (3b), and the other end (6b) to a transverse junction plane (1m) formed between the arms (1-2) in the rear part thereof.

8. Connecting device, as claimed in any one of claims 1 to 7, **characterized in that** the means (3) has away from its ends a flat configuration in order to be in a configuration similar to the flat cross-section of the arms (1-2) and to fit perfectly into the receiving accommodation between said arms.

9. Connecting device, as claimed in any one of claims 1 to 8, **characterized in that** it fits onto two attachment planes (P1-P2) separate from and parallel to each other, and **in that** one plane (P1) is designed in order to receive the connecting device by the rear part, by being arranged with oblong apertures (7) whereof the dimensions are set so that the disc (1e) of the body of the connecting device can pass through and be inserted, lengthwise, and **in that** the other support and latching plane (P2) is designed with cylindrical openings (8) so that the hooks (3a-5a) can pass through when said hooks are moved close to one another.

10. Connecting device, as claimed in any one of claims 1 to 9, **characterized in** its application to the attachment of trim plates for lateral sliding doors of vehicles.

## Patentansprüche

1. Steckvorrichtung von mehreren Bauteilen, **dadurch gekennzeichnet, dass** sie aus einer einstückigen Kunststoffeinheit besteht, die so ausgelegt ist, um eine doppelte Befestigung an voneinander entfernten und zueinander parallelen Befestigungsebenen (P1-P2) zu gewährleisten, wobei zwischen den besagten Ebenen ein Raum (E) beschrieben wird, und dass sie einen geschlossenen Körper umfasst, der das quaderförmige Außenvolumen der besagten Vorrichtung beschreibt und aus zwei S-förmig profilierten Seitenarmen (1-2) besteht, die zueinander parallel verlaufen und dabei den besagten Raum für die Aufnahme und gelenkige Lagerung einer Einrichtung (3) beschreiben, die zum Festhalten und Handhaben dient, und dass die beiden Seitenarme (1-2) an jedem ihrer beiden Enden fest verbunden sind, einerseits an der Rückseite durch ein profiliertes querverlaufendes Basisteil (4), das zum ersten Festhalten und Befestigen der Steckvorrichtung dient, und andererseits an der Vorderseite über eine quer verlaufende Ebene (5), die profiliert und so gestaltet ist, um eines der Elemente für das zweite Festhalten und Befestigen der Steckvorrichtung zu bilden.

2. Steckvorrichtung nach Anspruch 1, **dadurch gekennzeichnet, dass** die beiden Seitenarme (1-2) in ihrer Mitte (1a-1b) eine quer verlaufende Verbindungsachse (1c) aufweisen, von der aus die dazwischen liegende Einrichtung (3) gelenkig gelagert ist.

3. Steckvorrichtung nach einem der Ansprüche 1 und 2, **dadurch gekennzeichnet, dass** das quer verlaufende rückseitige Basisteil (4) ein Verbindungsstück (4a) zwischen den rückseitigen Enden (1d) der Arme (1a-1b) und dann eine längliche Scheibe (1e) aufweist, die gegenüber dem Verbindungsstück (4a) eine Nut (1f) beschreibt, und dass die längliche Form der Scheibe in der axialen Ebene des Körpers mit den Seitenarmen (1-2) ausgebildet ist.

4. Steckvorrichtung nach einem der Ansprüche 1 und 2, **dadurch gekennzeichnet, dass** die quer verlaufende Ebene (5) an der Vorderseite des Körpers in seinem vorderen Teil im Raum zwischen den Armen (1-2) in (1h) mündet, und dass diese Öffnung die Durchführung des Gelenks des Endstücks (3a) der Einrichtung (3) in ihrem vorderen Teil ermöglicht, und dass das besagte Endstück (3a) die Form eines Hakens besitzt und einer Kippbewegung unterworfen ist, und dass die quer verlaufende Ebene (5) des Körpers überstehend mit einer hakenartig vorspringenden Form (5a) ausgebildet ist, die der Hakenform (3a) der Einrichtung (3) gegenübersteht.

5. Steckvorrichtung nach einem der Ansprüche 1 - 4, **dadurch gekennzeichnet, dass** die Einrichtung (3) eine der S-Form des Körpers entgegengesetzte S-Form aufweist, und dass die Einrichtung (3) gegenüber der Querachse zwischen den Seitenarmen (1-2) und ihrer Mitte gelenkig gelagert ist.

6. Steckvorrichtung nach Anspruch 5, **dadurch gekennzeichnet, dass** das vordere Ende einen Haken und das hintere Ende (3b) eine Auflagefläche bildet, und dass das besagte hintere Ende (3b) durch eine elastisch verformbare Einrichtung (6) mit der gegenüberliegenden Innenseite des Körpers verbunden ist.

7. Steckvorrichtung nach Anspruch 6, **dadurch gekennzeichnet, dass** die elastisch verformbare Einrichtung (6) in Form einer Zunge ausgebildet ist, die ebenfalls bei der Herstellung der Steckvorrichtung ausgeformt wird und eine S-Konfiguration besitzt, dass diese Einrichtung (6) die Drehbewegung der Einrichtung (3) zum Einsetzen und zur Befestigung der Steckvorrichtung absorbiert, und dass ein Ende (6a) unter der Auflage- (3b) und Greifebene und das andere Ende (6b) an einer quer verlaufenden Verbindungsebene (1m) zwischen den Armen (1-2) in ihrem hinteren Teil befestigt ist.

8. Steckvorrichtung nach einem der Ansprüche 1 - 7, **dadurch gekennzeichnet, dass** die Einrichtung (3) außer den Endstücken eine abgeflachte Form aufweist, um eine ähnliche Konfiguration wie der abgeflachte Abschnitt der Arme (1-2) zu besitzen und sich sehr gut in den aufnehmenden Sitz zwischen den besagten Armen einzupassen.

9. Steckvorrichtung nach einem der Ansprüche 1 - 8, **dadurch gekennzeichnet, dass** sie an zwei voneinander entfernte und zueinander parallele Befestigungsebenen (P1-P2) angepasst werden kann, und dass eine Ebene (P1) so ausgebildet ist, um die Steckvorrichtung am hinteren Teil aufzunehmen, und dabei längliche Schlitze (7) aufweist, die so bemessen sind, um die Durchführung und Einführung der Scheibe (1e) des Steckvorrichtungskörpers zu ermöglichen, und zwar in seiner längeren Richtung, und dass die andere Auflage- und Aufhängeebene (P2) mit zylindrischen Öffnungen (8) für die Durchführung der Haken (3a-5a) in Annäherungsposition ausgebildet ist.

10. Steckvorrichtung nach einem der Ansprüche 1 - 9, angewandt auf die Befestigung von Zierplatten für seitliche Schiebetüren von Fahrzeugen.
